# FASCICULE DE BREVET EUROPEEN

(11) **EP 0 354 175 B1**
(45) Date de publication et mention de la délivrance du brevet: **23.06.1993**
(21) Numéro de dépôt: 89810537.4
(22) Date de dépôt: 14.07.1989
(51) Int. Cl.: G08C 25/00, E06B 9/68

(54) **Installation de commande de plusieurs récepteurs électriques susceptibles d'occuper au moins deux états**
Einrichtung zur Steuerung von einer Vielzahl elektrischer Empfänger, geeignet zum Annehmen von mindestens zwei Zuständen
Installation for controlling a plurality of electrical receivers susceptible to occupy at least two states

(30) Priorité: 29.07.1988 FR 8810282
(43) Date de publication de la demande: 07.02.1990
(73) Titulaire: SOMFY, F-74300 Cluses (FR)
(72) Inventeur: Jacquel, Dominique, F-74300 Cluses (FR)
(74) Mandataire: Meylan, Robert Maurice

(56) Documents cités:
- CH-A- 611 969
- FR-A- 2 510 777

## Description

L'invention a pour objet une installation de commande de plusieurs récepteurs électriques susceptibles d'occuper au moins deux états, comprenant des dispositifs de commande individuelle associés respectivement à des récepteurs et comprenant chacun des moyens de commutation destinés à commander à volonté le récepteur correspondant, chaque dispositif de commande individuelle étant commandé par l'intermédiaire d'une ligne commune de commande par un dispositif de commande générale comprenant des moyens de commutation destinés à commander à volonté tous les récepteurs, les moyens de commutation étant susceptibles de délivrer des ordres d'une durée supérieure ou inférieure à une valeur prédéterminée, chaque dispositif à commande individuelle comportant une unité logique de traitement comprenant un premier groupe de bornes d'entrée auxquelles sont reliés les moyens de commutation du dispositif de commande individuelle et des bornes de sortie reliées aux récepteurs, les moyens de commutation au dispositif de commande générale étant reliés à un second groupe d'entrées de chaque unité logique de traitement, chaque unité logique de traitement étant prévue pour accepter successivement les ordres donnés non simultanément par le dispositif de commande générale et le dispositif de commande individuelle. Les récepteurs électriques peuvent être par exemple des moteurs, des résistances de chauffage, des ampoules d'éclairage. Une application particulière est celle de la commande des stores et des volets roulants.

Une installation de ce type est décrite dans le brevet FR-A-2 510 777. Dans cette installation antérieure, chaque unité logique de traitement est en outre prévue pour accepter uniquement l'ordre donné par le dispositif de commande générale, tant que cet ordre est donné simultanément avec un ordre du dispositif de commande individuelle correspondant. Selon une forme d'exécution cette priorité absolue de la commande générale peut être levée au moyen d'un troisième interrupteur M/A en plus des deux interrupteurs "montée" et "descente", permettant de choisir entre le mode manuel et le mode automatique qui, lorsqu'il est placé dans la position M provoque le refus, par l'unité logique de traitement, d'un ordre donné par le dispositif de commande générale si la durée de cet ordre est inférieur à une valeur prédéterminée. A l'usage, ce mode de commande présente toutefois l'inconvénient suivant : lorsque l'ordre, prioritaire, de durée supérieure à ladite valeur prédéterminée, provenant de la commande générale, ayant par conséquent modifié l'état des récepteurs, cesse, les récepteurs correspondants ne reprennent pas leur position initiale et il est alors nécessaire de réactiver la commande individuelle. A titre d'exemple, on citera le cas d'un store pour lequel le troisième interrupteur M/A, est placé sur "MANUEL", qui a été déroulé puis réenroulé par un ordre prioritaire "MONTEE" (vent, pluie). Lorsque l'ordre prioritaire cessera, le store ne reprendra pas sa position déroulée initiale de lui-même, mais il sera nécessaire que l'utilisateur actionne spécialement le dispositif de commande individuelle. En outre, la signification de l'interrupteur M/A n'est souvent pas claire pour l'utilisateur qui a tendance à placer l'interrupteur M/A en mode manuel préalablement à toute action sur les interrupteurs "montée" ou "descente", ce qui est une erreur, le mode manuel n'ayant pas pour effet de permettre la commande par l'intermédaire des interrupteurs individuels M/I "montée", D/I "descente" mais d'isoler les récepteurs correspondants des ordres non prioritaires de la commande générale, comme ceci est décrit dans le brevet FR 2-A-510 777.

La commande selon l'art antérieur est en outre relativement complexe puisqu'elle fait intervenir au moins trois interrupteurs sans compter l'importance du câblage qui en résulte.

La présente invention a principalement pour but de permettre le réexécution automatique de la commande individuelle dont l'état a été modifié par un ordre général prioritaire.

L'installation selon la première revendication est caractérisée en ce que chaque unité logique de traitement des dispositifs de commande individuelle est agencée de telle manière que dans le cas ou la commande générale et la commande individuelle sont actionnées simultanément, l'unité logique de traitement accepte en priorité l'ordre de la commande générale sauf si celui-ci est d'une durée inférieure à une première valeur prédéterminée et si à l'instant du début de l'ordre de la commande générale au moins un des moyens de commande du dispositif de commande individuelle est actionné depuis une durée supérieure à au moins une seconde valeur prédéterminée.

Ces conditions permettent d'utiliser le même interrupteur de la commande individuelle pour commander le récepteur et sélectionner le mode d'utilisation, ce qui permet de supprimer l'interrupteur de sélection de mode M/A de l'art antérieur, ce qui a pour effet de rendre l'usage de la commande individuelle plus simple et plus sûr et en outre de réduire le coût et l'encombrement du câblage et par conséquent de l'installation.

Deux modes de réalisation de l'invention seront décrits à titre d'exemple en relation avec le dessin annexé dans lequel :
La figure 1 représente le schéma électrique d'un premier mode de réalisation;

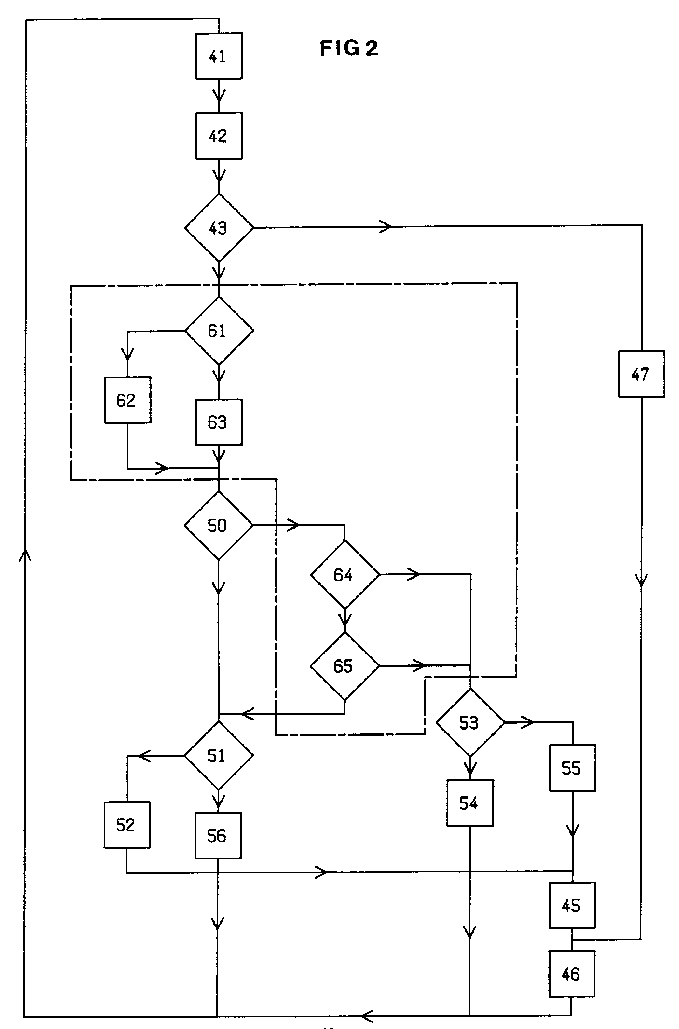

la figure 2 représente le diagramme des programmes contenus dans la mémoire non volatile du microcalculateur constituant l'unité logique de traitement, dans ce premier mode de réalisation;
la figure 3 représente la schéma électrique d'un second mode de réalisation;
la figure 4 représente le circuit logique constituant l'unité logique de traitement dans le circuit de la figure 3; et
la figure 5 représente l'état des entrées et des sorties des circuits temporisateurs du circuit de la figure 4 dans le cas où l'action de la commande générale, respectivement la commande individuelle est supérieure ou inférieure à la valeur prédéterminée correspondante T1, respectivement T2.

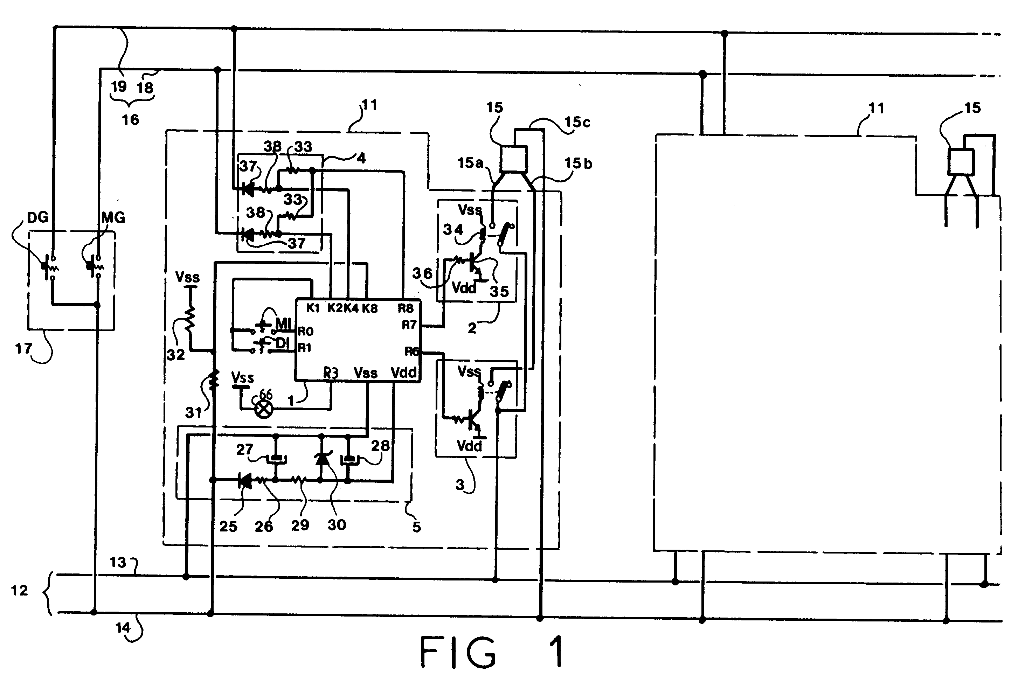

Le schéma électrique de l'installation représenté à la figure 1 est identique au schéma électrique représenté à la figure 1 du brevet FR-A-2 510 777 avec, en plus, une LED 66 montée entre la borne d'alimentation Vss du microcalculateur 1 et la borne de sortie R3 de ce microcalculateur 1. La description de ce circuit ne sera donc pas reprise ici en détail. On se contentera de rappeler que ce circuit comporte des dispositifs de commande individuelle 11 reliés au réseau d'alimentation 12 en courant alternatif par deux conducteurs 13 et 14, ces dispositifs de commande individuelle 11 étant associés respectivement à des récepteurs électriques 15, par exemple des moteurs de stores ou tapis roulants, et comportant des moyens de commutation constitués par un interrupteur MI (montée) et un interrupteur DI (descente) ayant chacun une position de travail et une position de repos. On précisera que, dans le cas particulier, ces interrupteurs peuvent être fixés dans leur position de travail. L'installation comporte en outre un dispositif de commande générale 17 relié, d'une part au réseau d'alimentation 12 et, d'autre part à la ligne commune de commande 16 comportant deux conducteurs 18 et 19. Ce dispositif de commande générale 17 comporte, dans l'exemple considéré, deux interrupteurs MG (montée) et DG (descente). Ces interrupteurs peuvent être manuels ou commandés automatiquement, par exemple par des capteurs, par exemple des capteurs de luminosité solaire, de vent, de pluie etc., dans le cas où l'installation est utilisée pour la commande de stores.

Comme dans l'art antérieur, le microcalculateur 1 comporte une mémoire non volatile qui contient un programme de scrutation 41, un programme de mise en mémoire 42, un programme de test 43, un programme de gestion des ordres reçus comportant plusieurs sous-programmes 50, 51, 52, 53, 54, 55, 56, un programme de traitement de l'ordre accepté 45, un programme de traitement de l'ordre accepté 47 et un programme de temporisation 46. En plus de ces programmes, la mémoire non volatile comprend, entre le programme de test 43 et le premier sous-programme 50 du programme de gestion des ordres reçus, des sous-programmes 61, 62 et 63. La mémoire non volatile comprend en outre deux sous-programmes 64 et 65 entre le sous-programme 50, d'une part, et les sous-programmes 51 et 53 d'autre part. Rappelons que le programme 43 teste qu'au moins un interrupteur MI, DI, MG, DG est actionné et que le sous-programme 50 teste qu'il s'agit d'un ordre provenant de la commande générale et les sous-programmes 51 et 53 testent respectivement la fonction STOP de la commande individuelle et la fonction STOP de la commande générale.

Le sous-programme 61 est un sous-programme de test testant l'existence d'un ordre MI ou DI, sur la commande individuelle, d'une durée supérieure à une valeur prédéterminée T2.

Le sous-programme 62 est un sous-programme d'activation d'indicateur prévu pour activer un indicateur, constitué par une case mémoire dans l'unité centrale du microcalculateur 1, dans le cas où l'ordre sur la commande individuelle est d'une durée supérieure à la valeur prédéterminée T2. Dans l'exécution particulière l'état de cet indicateur est affiché au moyen d'une LED 66 par l'activation de la sortie R3.

Le sous-programme 63 est un sous-programme de désactivation d'indicateur prévu pour désactiver l'indicateur dans le cas où l'ordre sur la commande individuelle est d'une durée inférieure à la valeur prédéterminée T2. Il désactive également la sortie R3 et la LED 66 s'éteint.

Le sous-programme 64 est un sous-programme de test prévu pour tester que l'indicateur est activé.

Le sous-programme 65 est un sous-programme de test prévu pour tester que l'ordre de la commande générale est actionné depuis un temps au moins égal à la valeur prédéterminée T1.

Le programme 41 de scrutation de la position, ouverte ou fermée, de chacun des interrupteurs MI, DI, MG, DG comporte des instructions dont la dernière précède la première instruction du programme 42 de mise en mémoire de ces positions. La dernière instruction de ce programme 42 précède la première instruction du programme de test 43 qui teste le fait qu'au moins un interrupteur a été actionné. Le dernière instruction du programme 43 est une instruction d'appel conditionnel à l'adresse de la première instruction du programme 47 du traitement du premier ordre accepté, ou à l'adresse de la première instruction du programme de gestion des ordres reçus comprenant les sous-programmes 61 à 65 et 50 à 54. Le sous-programme 61 teste l'existence d'un ordre de la commande individuelle d'une durée supérieure à T2. La dernière instruction du sous-programme 61 est une instruction à l'adresse de la première instruction du sous-programme 62 d'activation de l'indicateur ou à l'adresse de la première instruction du sous-programme 63 de désactivation de l'indicateur. Les dernières instructions des sous-programmes 62 et 63 précèdent la première instruction du sous-programme 50 de test de la position des interrupteurs du dispositif de commande générale, position mémorisée dans le programme 42. La dernière instruction du sous-programme 47 précède la première instruction du programme 46 de temporisation.

La dernière instruction du sous-programme 50 est une instruction d'appel conditionnel à l'adresse de la première instruction du sous-programme 64 de test que L'indicateur est activé ou à l'adresse de la première instruction du sous-programme 51 de test de la fonction STOP provenant du dispositif de commande individuelle correspondant. La dernière instruction du sous-programme 64 est une instruction d'appel conditionnel à l'adresse de la première instruction du sous-programme 53 de test de la fonction STOP provenant du dispostif de commande générale ou à l'adresse de la première instruction du sous-programme 65 de test que l'ordre de la commande générale est actionné depuis un temps au moins égal à T1. La dernière instruction du sous-programme 65 est une instruction d'appel conditionnel à l'adresse de la première instruction du sous-programme de test 51 ou à l'adresse de la première instruction du sous-programme de test de STOP 53. La dernière instruction du sous-programme 53 est une instruction d'appel conditionnel à l'adresse de la première instruction du sous-programme 55 de mémorisation de l'ordre donné par le dispositif de commande générale ou à l'adresse de la première instruction du sous-programme 54 de traitement de la fonction STOP provenant du dispositif de commande générale. La dernière instruction du sous-programme 54 précède la première instruction du programme 41 de scrutation. La dernière instruction du sous-programme 51 est une instruction d'appel conditionnel à l'adresse de la première instruction du sous-programme 56 de traitement de la fonction STOP provenant du dispositif de commande individuelle correspondant, ou à l'adresse de la première instruction du sous-programme 52 de mémorisation de l'ordre donné par le dispositif de commande individuelle correspondant. La dernière instruction du sous-programme 56 précède la première instruction du programme de scrutation 41. La dernière instruction du sous-programme 55 précède la première instruction du programme 45 du traitement de "ordre accepté". La dernière instruction du sous-programme 52 précède la première instruction du programme 45 du traitement de "ordre accepté". "L'ordre accepté" traité par le programme 45 est, soit l'ordre générale mémorisé dans le sous-programme 55, soit l'ordre individuel mémorisé dans le sous-programme 52 suivant le cas. La dernière instruction du programme 45 précède la première instruction du programme 46 de temporisation destiné à prépositionner, puis décrémenter un compteur de temporisation prévu dans le microcalculateur 1 correspondant. La dernière instruction du programme 46 précède la première instruction du programme 41 de scrutation. Un ordre de "STOP" individuel est donné en appuyant simultanément sur les interrupteurs MI et DI et un ordre STOP général est donné en appuyant simultanément sur les interrupteurs MG et DG.

On décrira maintenant le fonctionnement de l'installation.

On décrira tout d'abord le fonctionnement en cas d'action non simultanée sur le dispositif de commande générale et le dispositif de commande individuelle. Lorsque l'opérateur actionne l'un des interrupteurs de la commande individuelle, par exemple l'interrupteur MI, la borne d'entrée K1 du microcalculateur est reliée à la borne de sortie R0 et le programme de scrutation 41 lit cette fermeture de l'interrupteur MI et lit les ouvertures des autres interrupteurs et met en mémoire la position des interrupteurs à l'aide du programme 42. Le programme 43 teste qu'au moins un interrupteur a été actionné. A l'issue du programme 43, le sous-programme 61 teste qu'il n'y a pas de commande individuelle actionnée depuis une durée supérieure à la valeur prédéterminée T2 puis le sous-programme 63 désactive, s'il y a lieu, l'indicateur. Le sous-programme 50 teste que le dispositif de commande générale n'est pas actionné, puis teste, comme dans l'art antérieur, par le sous-programme 51 qu'il ne s'agit pas d'un STOP. L'enchaînement se poursuit ensuite comme décrit dans le brevet FR 2 510 777. Le sous-programme 52 mémorise l'ordre donné. Le programme 45 lit l'ordre et alimente la borne R7 du calculateur. Ensuite le programme de temporisation 46 prépositionne le compteur de temporisation, puis le programme de scrutation 41 lit à nouveau la position des interrupteurs. Tant que l'opérateur continue d'actionner l'interrupteur MI l'enchaînement des programmes s'effectue à nouveau comme précédemment. Le compteur de temporisation est décrémenté chaque fois que le programme 46 s'effectue et la borne de sortie R7 du calculateur continue d'être alimentée jusque'à ce que le compteur arrive à zéro, ce qui correspond à la fin de la période de temporisation. Lorsque l'opérateur relâche l'interrupteur MI, les programmes 41 et 42 s'effectuent comme précédemment, puis le programme 43 test le fait qu'aucun interrupteur n'est actionné. Le programme 47 de traitement du dernier ordre accepté lit l'ordre de montée mémorisé précédemment par le sous-programme 52 et le compteur de temporisation est décrémenté comme décrit ci-dessus, le moteur 15 s'arrêtant en fin de temporisation.

Si l'opérateur appuie simultanément sur les interrupteurs MI et DI, le sous-programme 51 teste qu'il s'agit d'un ordre de STOP et le sous-programme 56 remet à zéro le compteur de temporisation, ce qui entraîne l'arrêt instantané du moteur 15.

Lorsque l'opérateur actionne l'un ou l'autre des interrupteurs du dispositif de commande générale, par exemple l'interrupteur DG, le déroulement des programmes 41, 42, 43 et 50 s'effectue comme précédemment. Le sous-programme 50 teste qu'il s'agit d'un ordre provenant du dispositif de commande générale, puis le sous-programme 64 teste que l'indicateur n'est pas activé. Ensuite, l'enchaînement continue comme décrit dans le brevet antérieur. Le sous-programme 53 teste qu'il ne s'agit pas d'un ordre de STOP général. Le sous-programme 55 mémorise l'ordre de descente. Le programme 45 lit l'ordre de descente ainsi mémorisé et alimente la borne de sortie R6 de chaque dispositif de commande individuelle. Tant que l'opérateur continue d'actionner l'interrupteur DG l'enchaînement des programmes s'effectue à nouveau comme précédemment dans chaque microcalculateur 1. Lorsque l'opérateur relâche l'interrupteur DG, les programmes 41 et 42 s'effectuent comme précédemment dans chaque microcalculateur 1.

Si c'est un interrupteur MG qui est actionné, c'est alors la borne de sortie R7 de chaque microcalculateur 1 qui est alimentée et tous les moteurs 15 tournent en sens inverse.

Comme pour la commande individuelle, un ordre de STOP général est donné par l'action simultanée des interrupteurs MG et DG, comme décrit dans le brevet FR 2 510 777.

On décrira maintenant ce qui se passe en cas d'actions simultanées sur le dispositif de commande générale et un dispositif de commande individuelle.

Dans un premier cas on supposera que la durée de l'action sur le dispositif de commande individuelle est inférieure à la valeur prédéterminée T2 et que la durée de l'action sur la commande générale est inférieure ou supérieure à la valeur prédéterminée T1. Dans ce cas, l'enchaînement des programmes se déroule comme décrit plus haut pour l'actionnement de l'un des interrupteurs de la commande générale.

On supposera ensuite que la durée de l'action sur le dispositif de commande individuelle est supérieure à la valeur prédéterminée T2 et que la durée de l'action sur la commande générale est inférieure à la valeur prédéterminée T1. Une telle situation peut résulter, par exemple, de la fixation de l'interrupteur de la commande individuelle en position actionnée et de l'excitation momentanée d'un capteur d'ensoleillement dans une installation de commande de stores. Les ordres simultanés provoquent d'abord le déroulement des mêmes programmes 41, 42 et 43 dans tous les microcalculateurs, comme décrit précédemment. A l'issue du programme 43, le sous-programme 61 teste qu'il y a une commande individuelle qui est actionnée depuis au moins une durée supérieure à la valeur prédéterminée T2, puis le sous-programme 62 active l'indicateur et la sortie R3 du microcalculateur alimentant la LED 66 qui signale à l'utilisateur qu'un moyen de commande de la commande individuelle est fixé dans sa position actionnée. Le sous-programme 50 teste qu'il y a une commande générale, puis le sous-programme 64 teste que l'indicateur est activé. Le sous-programme 65 teste que la commande générale est d'une durée inférieure à la valeur prédéterminée T1 et l'enchaînement se poursuit par le sous-programme 51 comme décrit précédemment dans le cas de l'exécution d'un ordre individuel. La commande générale n'est pas exécutée.

On supposera enfin que la durée de l'action sur le dispositif de commande individuelle est supérieure à la valeur prédéterminée T2 et que la durée de l'action sur la commande générale est supérieure à la valeur prédéterminée T1. Dans une installation de commande de stores cette situation peut se produire par exemple en cas de vent. A l'issue du programme 43, le sous-programme 61 teste à nouveau qu'il y a une commande individuelle qui est actionnée depuis au moins une durée supérieure à la valeur prédéterminée T2, puis le sous-programme 62 active l'indicateur. Le programme 50 teste qu'il y a une commande générale, puis le sous-programme 64 teste que l'indicateur est activé et le sous-programme 65 teste que la commande générale est d'une durée supérieure à la valeur prédéterminée T1. L'enchaînement se poursuit alors à partir du sous-programme 53 comme décrit précédemment dans le cas de l'exécution d'une commande générale et c'est la commande générale qui est exécutée.

Lorsque la commande générale cesse, alors que la commande individuelle subsiste, les programmes 41, 42 et 43 se déroulent à nouveau comme précédemment, ainsi que les sous-programmes 61 et 62. Le sous-programme 50 teste qu'il n'y a pas de commande générale. L'enchaînement se poursuit à partir du sous-programme 51 comme décrit précédemment dans le cas de l'exécution d'une commande individuelle non simultanée et cette commande individuelle est exécutée.

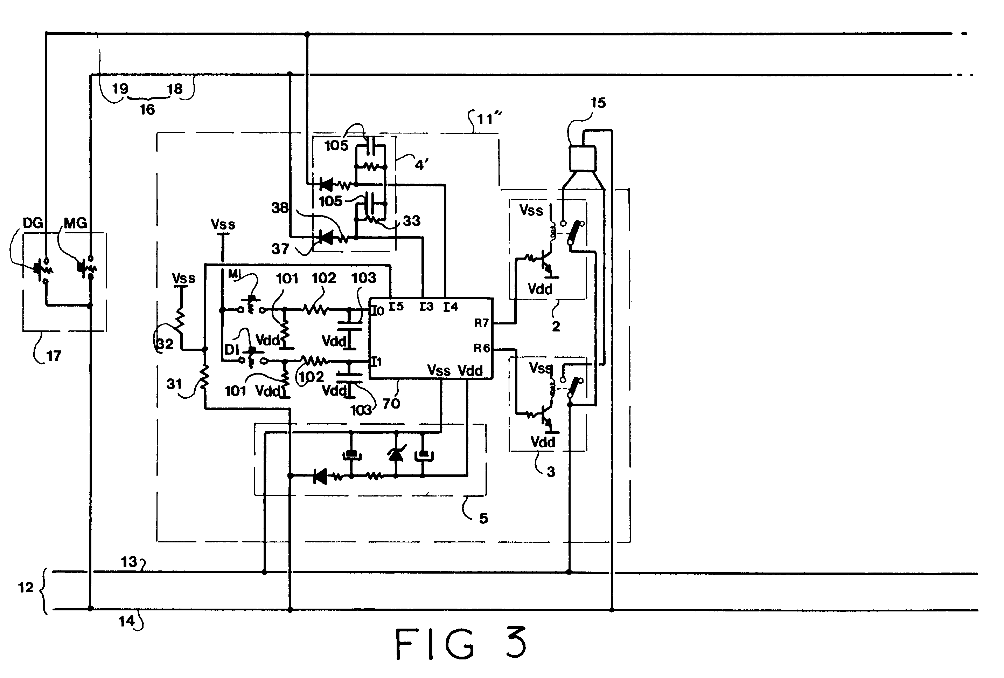

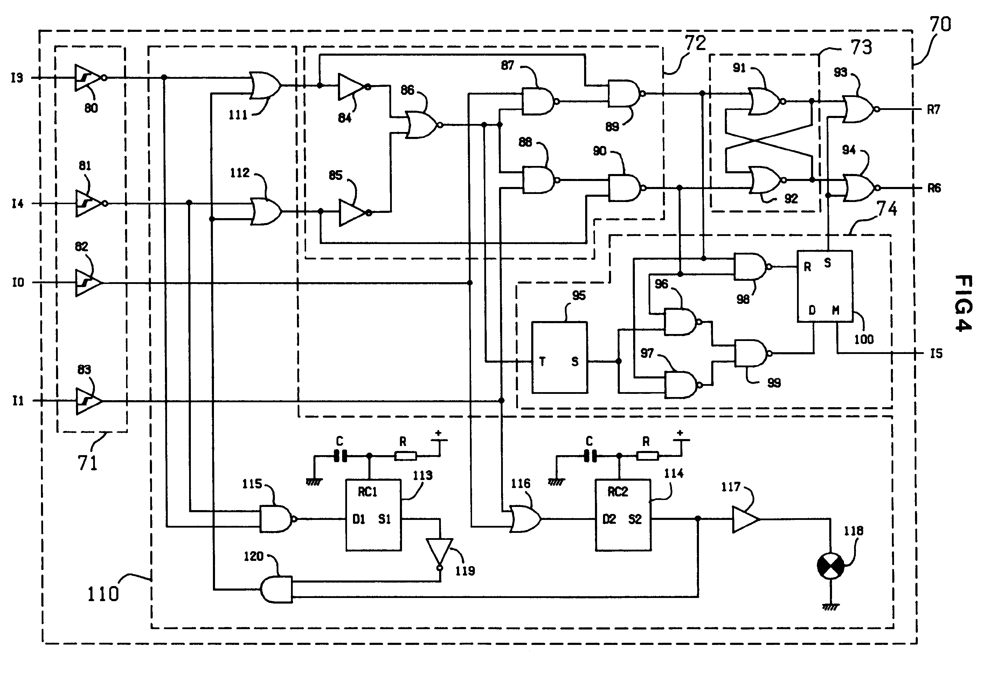

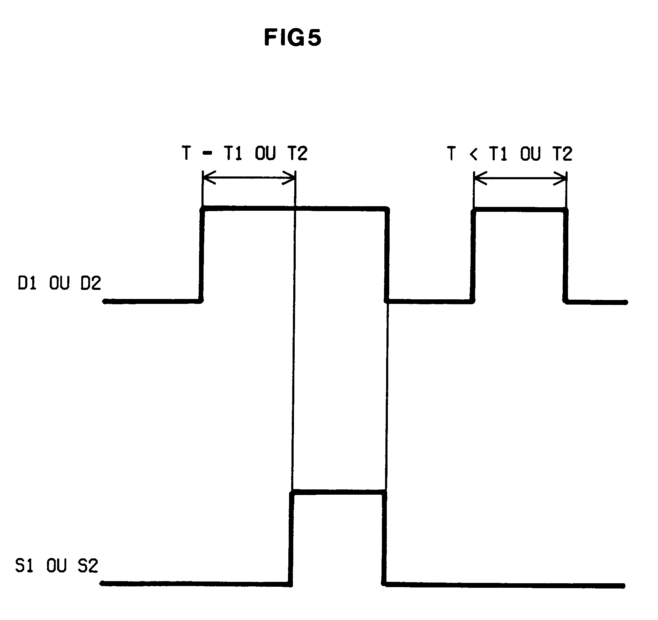

Le circuit du second mode de réalisation est représenté à la figure 3. Cette figure 3 est identique à la figure 5 du brevet FR-A-2 510 777 de sorte que sa description ne sera pas reprise en détail. On se contenter de rappeler que l'installation comporte un certain nombre de dispositifs de commande individuelle 11'' équipés chacun de deux interrupteurs individuels MI et DI et un dispositif de commande générale 17 analogue au dispositif 17 de la figure 1. Le microcalculateur de la figure 1 est remplacé par un circuit logique 70 représenté à la figure 4. Ce circuit logique 70 diffère du circuit logique 70 représenté à la figure 6 du brevet FR-A-2 510 777 par la présence d'un circuit 110 disposé entre les circuits 71 et 72. Les entrées I3, I4, I0 et I1 du circuit 70 correspondent respectivement aux interrupteurs MG, DG, MI, et DI.

Le circuit 110 comporte trois portes OU 111, 112 et 116, une porte NAND 115, une porte ET 120, une porte inverseuse 119 et deux circuits temporisateurs 113 et 114 comportant chacun une borne d'entrée D1, respectivement D2, une borne de sortie S1, respectivement S2 et une borne de temporisation RC1, respectivement RC2 reliées chacune à un circuit RC de temporisation. Les portes OU 111 et 112 ont chacune une des entrées respectivement reliée aux sorties des triggers 80 et 81 du circuit 71 et une autre entrée reliée à la sortie de la porte ET 120. Les sorties des portes OU 111 et 112 sont respectivement reliées aux portes inverseuses 84 et 85 du circuit 72. Les entrées de la porte NAND 115 sont reliées respectivement aux sorties des triggers 80 et 81, la sortie de cette porte 115 étant reliée à l'entrée D1 du circuit de temporisation 113. Les entrées de la porte OU 116 sont reliées respectivement aux sorties des triggers 82 et 83, alors que la sortie de cette porte est reliée à l'entrée D2 du circuit de temporisation 114. La sortie S1 du circuit de temporisation 113 est appliquée, à travers la porte inverseuse 119, à l'une des entrées de la porte ET 120. La sortie S2 du circuit de temporisation 114 est appliquée d'une part à l'autre entrée de la porte ET 120 et, d'autre part à un buffer 117 dont la sortie est reliée à l'une des bornes d'un indicateur 118 constitué par une LED, dont l'autre borne est reliée à la masse.

Les circuits de temporisation 113 et 114 sont prévus pour délivrer un état 1 sur leur sortie S1, respectivement S2, seulement si un état 1 est appliqué à leurs entrées D1, respectivement D2 pendant un temps supérieur à la valeur prédéterminée T1 pour le circuit 113 et T2 pour le circuit 114, et pour délivrer un état 0 lorsque les temps T1 et T2 sont respectivement inférieurs à la valeur prédéterminée. Les sorties des circuits 113 et 114 délivrent également un état 0 lorsque leurs entrées D1 et D2 sont à l'état 0. Ces conditions sont illustrées à la figure 5. Le même diagramme est valable pour les circuits 113 et 114, l'indice 1 se rapportant au circuit 113, tandis que l'indice 2 se rapporte au circuit 114.

On décrira tout d'abord le fonctionnement de ce second mode de réalisation dans le cas d'une action non simultanée sur le dispositif de commande individuelle et sur le dispositif de commande générale. Lorsque l'opérateur actionne un interrupteur d'une commande individuelle, par exemple un interrupteur MI, le potentiel de la borne I0 est porté à celui de la borne Vss et la sortie du trigger 82 passe à l'état 1, tandis que la sortie du trigger 83 reste à l'état 0 et que les sorties des triggers 80 et 81 restent à l'état 1. L'une des entrées des portes OU 111 et 112 est donc à l'état 1 et cet état 1 est appliqué aux portes inverseuses 84 et 85. On se trouve dans la situation de l'installation selon l'art antérieur. La sortie de la porte 86 est à l'état 1 et la sortie de la porte 87 passe à l'état 0. La sortie de la porte 89 passe à l'état 1 ce qui fait basculer à l'état 0 la sortie de la porte 91. La sortie de la porte 86 étant à l'état 1, le circuit monostable 95 n'est pas déclenché et sa sortie S reste à l'état 1. La sortie de la porte 89 étant à l'état 1, la sortie de la porte 97 passe à l'état 0 et la sortie de la porte 99 passe à l'état 1 ce qui fait déclencher, par l'intermédiaire de la borne D du circuit de temporisation 100, le départ d'une période de temporisation, par exemple 3 minutes. Dans le même temps, la sortie de la porte 90 est à l'état 0, ce qui fait passer la porte 98 à l'état 1, est la borne R du circuit de temporisation 100 à l'état 1, ce qui autorise la sortie S à passer à l'état 0 puisque le départ de la période de temporisation a été déclenchée, et la sortie de la porte 93, à l'état 1. La commande individuelle MI est donc exécutée, le moteur 15 étant alimenté et l'interrupteur MI pouvant être relâché étant donné que la sortie R7 reste alimentée aussi longtemps que la période de temporisation n'est pas finie.

Si l'on avait actionné la commande DI, les états respectifs des entrées des triggers 82, 83 et des sorties des portes 84 et 85 auraient été 0, 1, 1, 1, états correspondant au cas d'une commande individuelle DI dans l'installation antérieure, et la commande individuelle DI aurait été exécutée.

Comme dans l'installation antérieure, une action simultanée des interrupteurs MI et DI correspond à un ordre de STOP. Dans ce cas les sorties des portes 89 et 90 passent toutes deux à l'état 1 et la sortie de la porte 98 passe à l'état 0 ce qui a pour effet de remettre à 0 la période de temporisation. Les sorties des portes 93, 94 se retrouvent à l'état 0, les bornes de sorties R6 et R7 ne sont plus alimentées et le moteur 15 s'arrête.

Si l'opérateur actionne l'une des commandes générales, par exemple la commande DG, et qu'aucune des commandes individuelles n'est actionnée, les sorties des triggers 82 et 83 restent à l'état 0, tandis que la sortie du trigger 81 passe à l'état 0 et la sortie du trigger 80 reste à l'état 1. La sortie S2 du circuit de temporisateur 114 reste donc à l'état 0 et la sortie de la porte ET 120 reste à l'état 0. La sortie de la porte OU 112 passe à l'état 0 qui est appliqué à la porte inverseuse 85, tandis que la sortie OU 111 reste à l'état 1 qui est appliqué à la porte inverseuse 84. Cette configuration d'états correspond à la configuration d'états du circuit de l'installation antérieure dans le cas d'une commande générale DG simultanée avec une commande individuelle. La sortie de la porte NOR 86 passe à l'état 0 et la sortie de la porte NAND 90 passe à l'état 1. La borne T du circuit monostable 95 passe à l'état 0, et la sortie S de ce circuit 95 passe à l'état 0 pendant la période du circuit monostable 95, la borne D du circuit de temporisation 100 passe à l'état 0 pendant cette période. Ceci permet de redéclencher le circuit de temporisation 100, car lorsque la sortie S du circuit monostable 95 repasse à l'état 1, la sortie de la porte 99 passe à l'état 1, puisque la sortie de la porte 90 est à l'état 1, ce qui a pour effet de recommencer un cycle de temporisation car la sortie de la porte 98 est par ailleurs à l'état 1, la sortie de la porte 89 étant à l'état 0. La sortie de la porte 90 étant à l'état 1, la sortie de la porte 92 est à l'état 0, et la sortie de la porte 94 à l'état 1, puisque la sortie S du circuit de temporisation 100 est à l'état 0. La sortie R6 est alimentée et la commande générale DG est exécutée.

Si l'on avait actionné la commande générale MG, les états respectifs des entrées des triggers 82 et 83 et des sorties des portes inverseuses 84 et 85 auraient été 0, 0, 0, 1, états correspondant au cas d'une commande générale MG simultanée avec une commande invididuelle dans l'installation antérieure et la commande générale MG aurait été exécutée.

Examinons maintenant le cas d'une action simultanée sur le dispositif de commande générale et sur le dispositif de commande individuelle. Trois cas sont à distinguer :
a) l'action sur le dispositif de commande individuelle est de durée inférieure à la valeur prédéterminée T2 et l'action sur le dispositif de commande générale et de durée inférieure ou supérieure à la valeur prédéterminée T1;
b) l'action sur le dispositif de commande individuelle est de durée supérieure à la valeur prédéterminée T2 et l'action sur la commande générale est de durée inférieure à la valeur prédéterminée T1;
c) l'action sur le dispositif de commande générale est de durée supérieure à la valeur prédéterminée T1 et l'action sur la commande individuelle est de durée supérieure à la valeur prédéterminée T2.

Dans le cas a), supposons qu'on a une action simultanée sur MG et DI. La sortie du trigger 82 reste à l'état 0. La sortie du trigger 83 passe à l'état 1. La sortie du trigger 80 passe à l'état 0. La sortie du trigger 81 reste à l'état 1 et l'entrée de la porte inverseuse 85 reste à l'état 1.

La durée de l'action DI étant inférieure à T2, la sortie S2 du circuit temporisateur 114 reste à 0 (figure 5). Il en est de même de la sortie de la porte ET 120. La sortie du circuit OU 111 reste donc à l'état 0 et l'entrée de la porte inverseuse 84 reste à 0. Si la durée de l'action MG est supérieure à T1, la sortie S1 du circuit temporisateur 113 phase à l'état 1, mais la sortie S2 du circuit temporisateur 114 reste à l'état 0. La sortie de la porte ET 120 reste donc à l'état 0, état qui est appliqué à la porte inverseuse 84. Cette configuration d'états correspond à la configuration du circuit antérieur en cas de simultanéité des commandes générales individuelle, la priorité étant donné à la commande générale. La commande générale est donc exécutée.

Dans le cas b), avec une action simultanée de MG et DI, par exemple, c'est-à-dire avec un même état aux sorties des triggers 80 à 83 que dans le cas a), si la durée de l'action sur DI est supérieure à T2, la sortie S2 du circuit temporisateur 114 passe à l'état 1, alors que la sortie S1 du circuit temporisateur 113 reste à l'état 0. La sortie de la porte ET 120 et la sortie du buffer 117 passent à l'état 1. L'état de la sortie de la porte OU 112, appliqué à la porte inverseuse 85, reste 1. Par contre la sortie de la porte OU 111 passe à l'état 1, cet état 1 étant appliqué à la porte inverseuse 84. L'état respectif des sorties des triggers 82 et 83 et des portes inverseuses 84 et 85 est resté 0, 1, 1, 1 et la commande individuelle est exécutée.

Dans le cas c) avec une action simultanée sur MG et DI, par exemple, les sorties des triggers 80 à 83 étant les mêmes que dans le cas a) et la durée de l'action sur MG étant supérieure à T1, la sortie S1 du circuit temporisateur 113 passe alors à l'état 1 (figure 5) et la sortie de la porte inverseuse 119 passe à l'état 0. La sortie de la porte ET 120 passe donc à l'état 0. L'état de la sortie de la porte OU 112 n'est pas modifié, de même que l'état de l'entrée de la porte inverseuse 85. L'état de la sortie de la porte OU 111 passe à l'état 0, ainsi que l'état de l'entrée de la porte inverseuse 84.

L'état respectif des sorties des triggers 82 et 83 et des entrées des portes inverseuses 84 et 85 est 0, 1, 0, 1, comme dans le cas a) et la commande générale est exécutée.

Le buffer 117 étant à l'état 1, la LED 118 est éclairée, ce qui indique à l'utilisateur l'état verrouillé de la commande individuelle (cas b) et c). Lorsque la commande générale cesse, la sortie du trigger 80 reprend l'état 1 qui se retrouve alors à l'entrée de la porte inverseuse 84. Les circuits 82, 83, 84 et 85 retrouvent respectivement l'état 0, 1, 1, 1, et la commande individuelle est exécutée.

## Revendications

1. Installation de commande de plusieurs récepteurs électriques susceptibles d'occuper au moins deux états, comprenant des dispositifs de commande individuelle (11; 11'') associés respectivement à des récepteurs (15) et comprenant chacun des moyens de commutation (MI, DI) destinés à commander à volonté le récepteur correspondant, chaque dispositif de commande individuelle étant commandé par l'intermédiaire d'une ligne commune de commande (16) par un dispositif de commande générale (17) comprenant des moyens de commutation (MG, DG) destinés à commander à volonté tous les récepteurs, les moyens de commutation étant susceptibles de délivrer des ordres d'une durée supérieure ou inférieure à une valeur prédéterminée, chaque dispositif à commande individuelle (11, 11'') comportant une unité logique de traitement comprenant un premier groupe de portes d'entrée (K1; I0, I1) auxquelles sont reliés les moyens de commutation du dispositif de commande individuelle, et des bornes de sortie (R6, R7) reliées aux récepteurs, les moyens de commutation au dispositif de commande générale étant reliés à un second groupe d'entrées (K2, K4; I3, I4) de chaque unité logique de traitement (1; 70), chaque unité logique de traitement étant prévue pour accepter successivement les ordres donnés non simultanément par le dispositif de commande générale et le dispositif de commande individuelle, caractérisée en ce que chaque unité logique de traitement (1, 70) des dispositifs de commande individuelle est agencée de telle manière que dans le cas où la commande générale et la commande individuelle sont actionnées simultanément, l'unité de logique de traitement (1; 70) accepte en priorité l'odre de la commande générale (MG, DG) sauf si celui-ci est d'une durée inférieure à une première valeur prédéterminée (T1) et si à l'instant du début de l'ordre de la commande générale un au moins des moyens de commande du dispositif de commande individuelle (MI, DI) est actionné depuis une durée supérieure à au moins une deuxième valeur prédéterminée (T2).

2. Installation de commande selon la revendication 1, caractérisée en ce que chaque unité logique de traitement est constitué par un microcalculateur (1) contenant dans sa mémoire non volatile un programme de scrutation (41), un programme de mémorisation (42), un programme de test de la présence d'un ordre de la commande générale ou individuelle (43) et un programme (50 à 56, 61 à 65) de gestion de ordres donnés par les dispositifs de commande, fonctionnant séquentiellement, le programme de scrutation (41) étant prévu pour recueillir, sur le premier groupe de bornes d'entrée (K1), les informations relatives à la position des moyens de commutation (MI, DI) du dispositif de commande individuelle correspondant (11) et sur le second groupe de bornes d'entrée (K2, K4), les informations relatives à la position des moyens de commutation du dispositif de commande générale (17), le programme de mémorisation (42) étant prévu pour mémoriser ces positions des moyens de commutation, le programme de gestion (50 à 56, 61 à 65) des ordres donnés étant prévu pour tester (61) la présence d'une ordre de la commande individuelle de durée supérieure à la deuxième valeur prédéterminée (T2), pour tester (50) la présence d'un ordre de la commande générale, pour tester (65) la durée de l'ordre de commande générale en cas de test positif de la présence d'un ordre de la commande individuelle de durée supérieure à la deuxième valeur prédéterminée (T2), et, dans ce cas, pour exécuter l'ordre de la commande générale seulement si celui-ci est d'une durée supérieure ou égale à la première valeur prédéterminée (T1) bien entendu.

3. Installation de commande selon la revendication 1, caractérisée en ce que chaque unité logique de traitement est constituée par un circuit logique (70) comportant un circuit logique (71) de lecture de la position des moyens de commutation (MI, DI, MG, DG), relié à un circuit logique de priorité (110, 72) comprenant des moyens de comparaison (113, 114) des durées des ordres émanant de la commande générale et de la commande individuelle auxdites valeurs prédéterminées (T1, T2), et des moyens de blocage de l'ordre de la commande générale si, en cas de présence simultanée d'ordres de la commande générale et de la commande individuelle, la durée de la commande générale est inférieure à la première valeur prédéterminée (T1) alors que la durée de l'ordre de la commande individuelle a dépassé la deuxième valeur prédéterminée (T2), le circuit logique de priorité (110, 72) étant relié à un circuit logique de mémorisation (73) prévu pour mémoriser l'ordre accepté et commander ou non l'une des bornes de sortie (R6 ou R7) du circuit logique (70).

## Claims

1. An installation for the control of several electrical receivers capable of being in at least two states, comprising individual control devices (11, 11'') respectively associated with receivers (15) and each comprising means of switching (MI, DI) intended to control, at will, the corresponding receiver, each individual control device being controlled by means of a common control line (16) by a general control device (17) comprising means of switching (MG, DG) intended to control, at will, all of the receivers, the means of switching being capable of supplying commands having a duration longer than or shorter than a predetermined value, each individual control device (11, 11'') comprising a logic processing unit comprising a first group of input gates (K1; I0, I1) to which are connected the means of switching of the individual control device, and output terminals (R6, R7) connected to the receivers, the means of switching of the general control device being connected to a second group of inputs (K2, K4; I3, I4) of each logic processing unit (1; 70), each logic progressing unit being provided to accept successively the commands given in a non-simultaneous manner by the general control device and the individual control device, characterized in that each logic processing unit (1, 70) of the individual control devices is arranged in such a way that in the case in which the general control and the individual control are actuated simultaneously, the logic processing unit (1; 70) accepts the general control command (MG, DG) as a matter of priority unless the latter is of a duration shorter than a first predetermined value (T1) and if, at the time of the start of the general control command, at least one of the control means (MI, DI) of the individual control device has been actuated for a duration longer than at least a second predetermined value (T2).

2. The control installation as claimed in claim 1, characterized in that each logic processing unit is constituted by a microcomputer (1) containing in its non-volatile memory a polling program (41), a storage program (42), a program for testing the presence of a command from the general or individual control (43) and a program (50 to 56, 61 to 65) for managing the commands given by the control devices, operating sequentially, the polling program (41) being provided for collecting, on the first group of input terminals (K1), the information relating to the position of the switching means (MI, DI) of the corresponding individual control device (11) and on the second group of input terminals (K2, K4), the information relating to the position of the switching means of the general control device (17), the storage program (42) being provided for storing these positions of the switching means, the program (50 to 56, 61 to 65) for managing the commands given being provided for testing (61) the presence of a command from the individual control of duration longer than the second predetermined value (T2), for testing (50) the presence of a command from the general control, for testing (65) the duration of the command from the general control in the case of a positive test of the presence of a command from the individual control of duration longer than the second predetermined value (T2), and, in this case, for executing the command from the general control only of course if the latter is of a duration longer than or equal to the first predetermined value (T1).

3. The control installation as claimed in claim 1, characterized in that each logic processing unit is constituted by a logic circuit (70) comprising a logic circuit (71) for reading the setting of the means of switching (MI, DI, MG, DG), connected to a priority logic circuit (110, 72) comprising means of comparison (113, 114) of the durations of commands coming from the general control and from the individual control with the said predetermined values (T1, T2), and means of blocking the command from the general control if, in the case of the simultaneous presence of commands from the general control and from the individual control, the duration of the general control is shorter than the first predetermined value (T1) while the duration of the command from the individual control has exceeded the second predetermined value (T2), the priority logic circuit (110, 72) being connected to a logic storing circuit (73) provided for storing the accepted command and for controlling or not controlling one of the output terminals (R6 or R7) of the logic circuit (70).

## Patentansprüche

1. Vorrichtung zum Steuern mehrerer elektrischer Empfänger, die wenigstens zwei Zustände einnehmen können, mit individuellen Steuereinrichtungen (11; 11''), welche jeweils den Empfängern (15) zugeordnet sind und von denen jede Umschaltmittel (MI, DI) aufweist, die dazu bestimmt sind, den betreffenden Empfänger nach Belieben zu steuern, wobei jede individuelle Steuereinrichtung mit Hilfe einer gemeinsamen Steuerleitung (16) durch eine allgemeine Steuereinrichtung (17) steuerbar ist, welche Umschaltmittel (MG, DG) aufweist, die dazu bestimmt sind, nach Belieben alle Empfänger zu steuern, wobei die Umschaltmittel Befehle mit einer Dauer liefern können, die länger oder kürzer als ein vorbestimmter Wert ist, und jede individuelle Steuereinrichtung (11, 11'') eine logische Verarbeitungseinheit hat, die eine erste Gruppe von Eingangsgattern (K1; I0, I1), an welche die Umschaltmittel der individuellen Steuereinrichtung angeschlossen sind, und Ausgangsklemmen (R6, R7) aufweist, die an die Empfänger angeschlossen sind, wobei die Umschaltmittel für die allgemeine Steuereinrichtung mit einer zweiten Eingangsgruppe (K2, K4; I3, I4) jeder logischen Verarbeitungseinheit (1; 70) verbunden sind und jede logische Verarbeitungseinheit dazu vorgesehen ist, sukzessive die nicht gleichzeitig durch die allgemeine Steuereinrichtung und die individuelle Steuereinrichtung gegebenen Befehle anzunehmen, dadurch gekennzeichnet, dass jede logische Verarbeitungseinheit (1, 70) der individuellen Steuereinrichtungen dazu eingerichtet ist, im Falle, dass die allgemeine Steuerung und die individuelle Steuerung gleichzeitig betätigt werden, den Befehl der allgemeinen Steuerung (MG, DG) mit Vorrang anzunehmen, ausgenommen, wenn dieser von kürzerer Dauer als ein vorbestimmter Wert (T1) ist und wenn im Augenblick des Beginns des Befehls der allgemeinen Steuerung wenigstens eines der Steuermittel der individuellen Steuereinrichtung (MI, DI) für eine Dauer betätigt wird, die länger als wenigstens ein zweiter vorbestimmter Wert (T2) ist.

2. Steuervorrichtung nach Anspruch 1, dadurch gekennzeichnet, dass jede logische Verarbeitungseinheit aus einem Mikrorechner (1) besteht, der in seinem nicht flüchtigen Speicher ein Abrufprogramm (41), ein Speicherprogramm (42), ein Programm zum Prüfen der Gegenwart eines Befehls der allgemeinen oder der individuellen Steuerung (43) und ein Programm (50 bis 56, 61 bis 65) zur Verarbeitung der von den Steuereinrichtungen gegebenen Befehlen enthält, welches sequentiell arbeitet, wobei das Abrufprogramm (41) dazu vorgesehen ist, auf der ersten Gruppe von Eingangs-klemmen (K1) die die Stellung der Umschaltmittel (MI, DI) der entsprechenden individuellen Steuereinrichtung (11) betreffenden Informationen zu sammeln und auf der zweiten Gruppe von Eingangsklemmen (K2, K4) die die Stellung der Umschaltmittel der allgemeinen Steuereinrichtung (17) betreffenden Informationen zu sammeln, wobei das Speicherprogramm (42) dazu vorgesehen ist, diese Stellungen der Umschaltmittel zu speichern und das Programm (50 bis 56, 61 bis 65) zur Verarbeitung der gegebenen Befehle dazu vorgesehen ist, die Gegenwart eines Befehls der individuellen Steuerung mit einer Dauer, die länger als der zweite vorgegebene Wert (T2) ist, zu prüfen (61), die Gegenwart eines Befehls der allgemeinen Steuerung zu prüfen (50), die Dauer des Befehls der allgemeinen Steuerung im Falle einer positiven Prüfung der Gegenwart eines Befehls der individuellen Steuerung mit einer Dauer, die länger als der zweite vorbestimmte Wert (T2) ist, zu prüfen (65) und in diesem Falle den allgemeinen Steuerbefehl nur dann auszuführen, wenn dieser eine Dauer hat, die länger als der erste vorbestimmte oder gleich dem ersten vorbestimmten Wert (T1) ist.

3. Steuervorrichtung nach Anspruch 1, dadurch gekennzeichnet, dass jede logische Verarbeitungseinheit aus einer logischen Schaltung (70) besteht, die eine logische Schaltung (71) zum Lesen der Stellung der Umschaltmittel (MI, DI, MG, DG) aufweist und mit einer logischen Prioritätsschaltung (110, 72) verbunden ist, welche Mittel zum Vergleichen (113, 114) der Dauern der von der allgemeinen Steuerung und von der individuellen Steuerung ausgehenden Befehle mit den vorbestimmten Werten (T1, T2) und ferner Mittel zum Blockieren des Befehls der allgemeinen Steuerung aufweist, wenn, im Falle der gleichzeitigen Gegenwart von Befehlen der allgemeinen Steuerung und der individuellen Steuerung, die Dauer der allgemeinen Steuerung kürzer als der erste vorbestimmte Wert (T1) ist, während die Dauer des Befehls der individuellen Steuerung den zweiten vorbestimmten Wert (T2) überschritten hat, und dass die logische Prioritätsschaltung (110, 72) an eine logische Speicherschaltung (73) angeschlossen ist, die dazu vorgesehen ist, den angenommenen Befehl zu speichern und eine der Ausgangsklemmen (R6 oder R7) der logischen Schaltung (70) zu steuern oder nicht zu steuern.
